# EUROPEAN PATENT APPLICATION

(11) **EP 3 943 352 A1**
(43) Date of publication of application: **26.01.2022**
(21) Application number: 19932431.0
(22) Date of filing: 11.06.2019
(51) Int. Cl.: B60W 30/00, B60W 50/00, H04L 29/08

(54) **DRIVING CONTROL METHOD, APPARATUS, DEVICE, MEDIUM, AND SYSTEM**

(71) Applicant: Apollo Intelligent Driving Technology (Beijing) Co., Ltd., Haidian District Beijing 100085 (CN)
(72) Inventor: ZHANG, Zhuhua, Beijing 100085 (CN); BAO, Zewen, Beijing 100085 (CN); HU, Xing, Beijing 100085 (CN)
(74) Representative: Lucke, Andreas
(86) International application number: PCT/CN2019/090768
(87) International publication number: WO 2020/248136

(57) **Abstract**

A driving control method, an apparatus, a device, a medium, and a system. The driving control method comprises providing, at a service node (501), access for a functional node (502) on the basis of an access protocol supported by the functional node (502), the functional node (502) being configured to provide a communication function with an on-board unit (OBU) (132) of a vehicle (130) or to provide a computing function for information associated with the vehicle (130). The method further comprises transmitting configuration information for the functional node (502) to the functional node (502) on the basis of the access, and controlling message interaction with the functional node (502) on the basis of the configuration information so as to facilitate driving control on the vehicle (130) via the OBU (132). The driving control function of the vehicle (130) is achieved by means of the assistance of an external device, and effective safe and autonomous driving can be realized. Therefore, intelligent control of the overall transportation system is implemented.

## Description

### TECHNICAL FIELD

Embodiments of the present disclosure relate generally to the field of controlling driving, and more particularly, to a method, apparatus, device, computer-readable storage medium, and system for controlling driving.

### BACKGROUND

In recent years, the Intelligent Transportation System (ITS), as a new technology, uses advanced science and technology to comprehensively consider systems related to roads, transportation, people and environment and so on, to realize intelligent traffic management, which in turn makes it possible to solve road traffic problems. With a development of communication networks, and in particular with a deployment of 5G communication networks, it is desirable for ITS to support a collaborative communication and interaction among human-vehicle-road-cloud, so as to provide different services for different types of vehicles, including high-level autonomous driving vehicles, communication-capable networking vehicles, and existing common travel vehicles. As a result, the safety and the passing efficiency of driving are improved, and intelligent traffic is realized. However, there has not yet been such a solution for regulating the collaborative interaction between the vehicle terminal, the road terminal and the cloud terminal.

### SUMMARY

According to embodiments of the present disclosure, a scheme for controlling driving is provided.

In a first aspect of the present disclosure, a method for controlling driving is provided. The method may include: providing, at a service node, an access to a functional node based on an access protocol supported by the functional node, where the functional node is configured to provide a communication function with an on-board unit OBU of a transportation means or to provide a computing function for information associated with the transportation means; transmitting, based on the access, configuration information for the functional node to the functional node; and controlling, based on the configuration information, a message interaction with the functional node to facilitate controlling the driving of the transportation means via the OBU.

In a second aspect of the present disclosure, a method for controlling driving is provided. The method may include: obtaining, at a functional node, an access to a service node based on an access protocol supported by the functional node, where the functional node is configured to provide a communication function with an on-board unit OBU of a transportation means or to provide a computing function for information associated with the transportation means; receiving, based on the access, configuration information for the functional node from the service node; and performing, based on the configuration information, a message interaction with the service node to facilitate controlling the driving of the transportation means via the OBU.

In a third aspect of the present disclosure, an apparatus for controlling driving is provided. The apparatus may include: an access module configured to provide, at a service node, an access to a functional node based on an access protocol supported by the functional node, where the functional node is configured to provide a communication function with an on-board unit OBU of a transportation means or to provide a computing function for information associated with the transportation means, a configuration module configured to transmit configuration information for the functional node to the functional node based on the access, and an interaction module configured to control a message interaction with the functional node based on the configuration information to facilitate controlling the driving of the transportation means via the OBU.

In a fourth aspect of the present disclosure, an apparatus for controlling driving is provided. The apparatus may include an access module configured to, at a functional node, obtain an access to a service node based on an access protocol supported by the functional node, where the functional node is configured to provide a communication function with an on-board unit OBU of a transportation means or to provide a computing function for information associated with the transportation means. The apparatus further comprises a configuration module configured to receive configuration information for the functional node from the service node based on the access, and an interaction module configured to perform a message interaction with the service node based on the configuration information to facilitate controlling the driving of the transportation means via the OBU.

In a fifth aspect of the present disclosure, there is provided an electronic device including one or more processors, and a storage device for storing one or more programs. When the one or more programs are executed by the one or more processors, the one or more processors implement the method according to the first aspect of the present disclosure.

In a sixth aspect of the present disclosure, there is provided an electronic device including one or more processors, and a storage device for storing one or more programs. When the one or more programs are executed by the one or more processors, the one or more processors implement the method according to the first aspect of the present disclosure.

In a seventh aspect of the present disclosure, there is provided a computer readable storage medium, in which computer programs are stored. When the programs are executed by a processor, the method according to the first aspect of the present disclosure is implemented.

In an eighth aspect of the present disclosure, there is provided a computer readable storage medium, in which computer programs are stored. When the programs are executed by a processor, the method according to the second aspect of the present disclosure is implemented.

In the ninth aspect of the present disclosure, a driving control system is provided. The system includes a central platform subsystem including the apparatus according to the third aspect. The system further includes at least one of a roadside subsystem and an edge computing subsystem, including the apparatus according to the fourth aspect.

It shall be understood that the contents described in the Summary section does not intend to limit any key or important features of the embodiments of the disclosure, nor does it intend to limit the scope of the disclosure. Other features of the present disclosure will become apparent from the following description.

### BRIEF DESCRIPTION OF THE DRAWINGS

With reference to the accompanying drawings and the following detailed description, the above and other features, advantages and aspects of the embodiments of the present disclosure will become more apparent. In the drawings, the same or similar labels indicate the same or similar elements:
Fig. 1 illustrates a schematic diagram of an example environment in which various embodiments of the present disclosure may be implemented;
Fig. 2 illustrates a block diagram of a driving control system according to some embodiments of the present disclosure;
Figs. 3A-3D illustrate a block diagram of a networking example associated with a roadside subsystem according to some embodiments of the present disclosure;
Fig. 4 illustrates a block diagram of a networking example associated with an edge computing subsystem according to some embodiments of the present disclosure;
Fig. 5 illustrates a block diagram of an example structure of an abstract service node according to some embodiments of the present disclosure;
Fig. 6 illustrates a signaling diagram between a service node and a functional node according to some embodiments of the present disclosure;
Figs. 7A and 7B illustrate a signaling diagram among the service node, the functional node, and an on-board unit (OBU) according to some embodiments of the present disclosure;
Fig. 8 illustrates a block diagram of a driving control system according to other embodiments of the present disclosure;
Figs. 9A-9C illustrate a signaling diagram among the service node, the functional node, a third party platform and the OBU according to some embodiments of the present disclosure;
Fig. 10 is a flowchart of a method for controlling driving at a service node side, according to some embodiments of the present disclosure;
Fig. 11 is a schematic block diagram of an apparatus for controlling driving at a functional node side, according to some embodiments of the present disclosure;
Fig. 12 is a schematic block diagram of an apparatus for controlling driving at the service node side, according to some embodiments of the present disclosure;
Fig. 13 is a schematic block diagram of an apparatus for controlling driving at the functional node side, according to some embodiments of the present disclosure; and
FIG. 14 illustrates a block diagram of a device capable of implementing various embodiments of the present disclosure.

### DETAILED DESCRIPTION OF EMBODIMENTS

Embodiments of the present disclosure will be described in detail below with reference to the accompanying drawings. Although some embodiments of the disclosure are shown in the drawings, it should be understood that the disclosure may be embodied in various forms and should not be construed as limitation to the embodiments set forth herein. On the contrary, these examples are provided for a more complete understanding of this disclosure. It shall be understood that the drawings and examples of the present disclosure are for illustrative purposes only and do not intend to limit the scope of protection of the disclosure.

In the description of the embodiments of the present disclosure, the term "include" and its analogous terms shall be understood as open-ended, i.e., "including, but not limited to. "The term "based on" shall be understood as "based at least partially on". The term "one embodiment" or "the embodiment" shall be understood as "at least one embodiment". The terms first, second, etc. may refer to different objects or a given object. The other explicit and implicit definitions may be included below.

As mentioned above, in an intelligent transportation system (ITS), controlling the driving of a transportation means, such as a vehicle, is related to an environmental perceptual capability and a communication capability of the transportation means. At present, the intellectualization and networking of transportation means are developing.

From a viewpoint of intellectualization, the intelligent grading of transportation means ranges from driving assistance to fully autonomous driving. However, the intelligent transportation means are classified according to the intelligent degrees of the transportation means themselves, and the transportation means themselves do not necessarily have the ability to communicate with other devices, that is, the intelligent transportation means have a stand-alone intellectualization. For example, for an L4/L5-level autonomous driving vehicle, it is required to deploy devices such as a camera, a laser radar, and a millimeter-wave radar on the vehicle, and adjust the motion state of the autonomous vehicle in real time by perceiving the surrounding environment of the vehicle. Due to the limitation of the stand-alone vehicle, even if the vehicle is an intelligent vehicle of the highest level, there are still problems such as shielding, limited perceptual distances, and the like in the perception by the stand-alone vehicle. Therefore, it is necessary to compensate for the existing deficiencies of a high-intelligent vehicle, and improve the intelligent degree of a low-intelligent vehicle in other ways.

From a viewpoint of networking, in the conventional networking auxiliary information interaction (such as navigation information acquisition, etc.) and the networking collaborative decision-making and control ("vehicle to vehicle" and "vehicle to road" are coordinated to plan and control vehicles), the networking dimension of the transportation means mainly focuses on the degree of communication between participants such as the vehicle-to-vehicle, vehicle-to-road, vehicle-to-cloud, vehicle-to-person, and the like. The higher the networking level is, the more complete the available information for sharing between the transportation means is. However, since many transportation means (such as vehicles) in the present market do not have the networking function or only have the initial networking function, there is a need to provide a way in which transportation means with a low networking level may also participate the advanced networking to realize the intelligent control of the overall traffic system.

According to embodiments of the present disclosure, an improved scheme for controlling the driving is provided. This scheme normalizes interactions between a service node and a functional node providing communication or computing functions. The functional node may be a computing function that provide communication with the on-board unit of the transportation means or information associated with the transportation means. Specifically, the service node provide an access to the functional node based on the access protocol, transmit configuration information for the functional node to the functional node based on the access, and control the message interaction with the functional node based on the configuration information to facilitate controlling the driving of the transportation means via the OBU. Thus, the intelligent control of the overall traffic system is realized.

Embodiments of the present disclosure will be described in detail below with reference to the accompanying drawings.

### Examples of environment

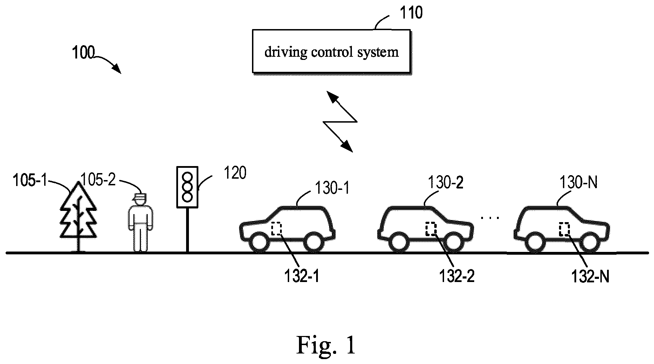

Fig. 1 illustrates a schematic diagram of an example traffic environment 100 in which various embodiments of the present disclosure may be implemented. In the example environment 100, one or more transportation means 130-1, 130-2, ..., 130-N are included. For ease of description, the transportation means 130-1, 130-2, ..., 130-N may be collectively or individually referred to as transportation means 130. As used herein, a transportation means refers to any type of means that is capable of carrying and moving people and/or objects. In Fig. 1 and other figures as well as the descriptions herein, the transportation means 130 is illustrated as a vehicle. The vehicle may be a motor vehicle or a non-motor vehicle, examples of which include, but are not limited to, a car, a truck, a bus, an electric vehicle, a motorcycle, a bicycle, etc. However, it should be understood that the vehicle is only an example of the transportation means. The embodiments of the present disclosure are equally applicable to transportation means other than vehicles, such as boats, trains, airplanes, etc.

One or more of the transportation means 130 in the environment 100 may be transportation means with certain autonomous driving capabilities, also referred to as autonomous driving transportation means. Another or some of the transportation means 130 in the environment 100 may be the transportation means that do not have autonomous driving capabilities or have only driving assistance capabilities. Such transportation means may be controlled by the driver. The integrated device or removable device in one or more transportation means 130 may have the ability to communicate with other devices based on one or more communication technologies, such as via vehicle to vehicle (V2V) technology, vehicle to infrastructure(V2I) technology, vehicle to network (V2X) technology, or any other communication technology, with other transportation means or other devices.

The transportation means 130 may be installed with a positioning device to determine its own position, and the positioning device may, for example, realize positioning based on any of the following technologies: positioning technology based on laser point cloud data, a Global Positioning System (GPS) technology, a Global Navigation Satellite System (GLONASS) technology, a Beidou navigation system technology, a Galileo positioning system (Galileo) technology, a Quasi-Zenith Satellite System(QAZZ) technology, base station location technology, a Wi-Fi positioning technology, etc.

In addition to the transportation means 130, there may be other objects in the environment 100, such as animals, plants 105-1, people 105-2, transportation infrastructures and other movable or immovable objects. The transportation infrastructures include objects for guiding traffic and indicating traffic rules, such as traffic lights 120, traffic signs (not shown), streetlights, etc. The objects outside the transportation means are collectively referred to as objects 105 outside the vehicle.

The system 110 for controlling the driving of the vehicle 130 is also deployed in the environment 100. The system 110 is configured to at least control the driving of the transportation means 130 in the environment 100. Each of the transportation means 130-1, 130-2, ..., 130-N may be provided with corresponding OBU 132-1, 132-2, ..., 132-N. For ease of description, OBU 132-1, 132-2, ..., 132-N may be collectively or individually referred to as OBU 132. The system 110 maybe in signaling communication with the OBU 132. The OBU 132 may support communication with the system 110 to obtain corresponding information, and control the driving of the transportation means 130 based on the obtained information. The OBU 132 may also transmit information related to the transportation means 130 to the system 110, such as feedback information, perceptual data acquired by a perceptual device (if present) on the transportation means 130, or processing results of the perceptual data by a computing unit (if present) on the transportation means 130, etc. According to an embodiment of the present disclosure, a partial or all of the driving control of the transportation means with various intelligent levels and networking levels may be controlled through the driving control system 110 and the OBU 132.

It should be understood that the facilities and objects shown in Fig. 1 are merely examples. The type, number, relative arrangement, etc., of objects present in different environments may vary, and the scope of the present disclosure is not limited thereto. For example, there may be more roadside devices 110 and perceptual devices 260 deployed on the roadside in the environment 100 for monitoring additional geographic locations. Embodiments of the present disclosure may be related to a plurality of remote devices or may not be related to any remote device.

### Examples of driving control system

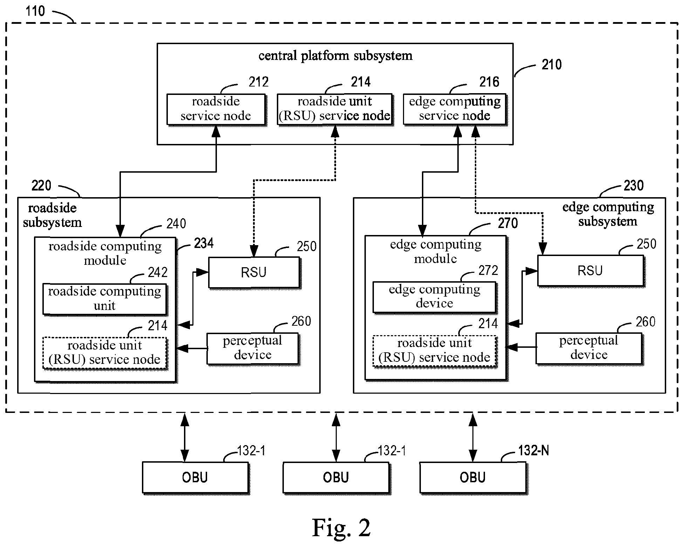

FIG. 2 shows a schematic block diagram of the driving control system 110 of FIG. 1 according to some embodiments of the present disclosure. FIG. 2 also shows an OBU 132 arranged on the transportation means 130 interacting with the driving control system 110. The driving control system 110 includes a central platform subsystem 210 for centralized control and management of subsystems in the driving control system 110. The central platform subsystem 210 may also be referred to as a central platform, a centre platform, a centralized platform, etc. The driving control system 110 may also include one or more roadside subsystems 220, and/or one or more edge computing subsystems 230, which are configured to provide perceptual, decision-making and/or collaborative control of the driving of the transportation means 130.

The central platform subsystem 210 may include one or more of a roadside service node 212, a roadside unit (RSU) service node 214, and an edge computing service node 216. The roadside service node 212 is configured to manage, control, and perform message interaction with the edge computing device in the driving control system 110, and the RSU service node 214 is configured to manage, control, and perform data interaction with the RSU in the driving control system 110. The edge computing service node 216 is configured to manage, control, and perform data interaction with the edge computing device in the driving control system 110.

A plurality of the roadside subsystems 220 are mainly deployed near the geographic area where the transportation means 130 are driving and/or parking, for example, may be deployed at intervals on sides of the road, or may have a predetermined distance from a location where the transportation means 130 may arrive at. The roadside subsystems 220 may include roadside computing module 240, one or more RSU 250, and one or more perceptual devices 260. The roadside computing module 240 may include a roadside computing unit 242 and an RSU service node 214.

The RSU 250 is a communication capable device. The RSU 250 may provide direct communication with the OBU 132, for example, direct communication based on the Internet of things(V2X) protocol. Alternatively or additionally, the RSU 250 may also provide network communication with the RSU service node 214 in the central platform subsystem 210 and/or roadside computing module 240, such as via a cellular network.

The perceptual device 260 is configured to monitor the environment 100 in which the transportation means 130 is located. For example, the perceptual device 260 may be configured to perceive a road traffic condition, a road natural condition, a weather condition, etc., of the environment 100 within a perceptual range, and input perceptual data to the roadside computing module 240. The perceptual device 260 may be disposed near a traveling area and/or a parking area of the transportation means 130. Depending on the perceptual capability, the perceptual range of the perceptual device 260 is limited. In some cases, the perceptual range of the plurality of neighboring deployed perceptual devices 260 may have a partial overlap. The perceptual device 260 may be disposed on the roadside, on the road surface, or deployed at a height, such as fixed at a height by a support bar, as desired. In some examples, the perceptual device 260 may alternatively be arranged in a removable way to, such as, a removable perceptual site, in addition to fixing the perceptual device 260 at a particular location.

The perceptual device 260 may include one or more sensor units, which may be of the same type or different types, and may be distributed at a given location or different locations of the perceptual range 102. Examples of sensor units in the perceptual device 260 may include, but are not limited to, an image sensor (e.g., a camera), a lidar, a millimeter wave radar, an infrared sensor, a positioning sensor, an illumination sensor, a pressure sensor, a temperature sensor, a humidity sensor, a wind speed sensor, a wind direction sensor, an air quality sensor, etc. The image sensor may acquire image information, the laser radar and the millimeter-wave radar may collect laser point cloud data, the infrared sensor may utilize infrared rays to detect an environmental condition in the environment, the positioning sensor may collect position information of the object, and the illumination sensor may collect a measure indicative of the intensity of illumination in the environment; the pressure, temperature, and humidity sensors may collect metrics indicative of pressure, temperature, and humidity, respectively, the wind speed and the wind direction sensors may respectively acquire measurement values for indicating the wind speed and the wind direction, and the air quality sensor may collect some indicators related to air quality, such as oxygen concentration, carbon dioxide concentration, dust concentration and contaminant concentration in the air. It will be appreciated that only some examples of sensor units are listed above. Other types of sensors may also be present, depending on the actual needs.

The roadside computing unit 242 in the roadside computing module 240 is configured to provide computing functions, in particular to provide functions for computing information associated with the transportation means 130. The roadside computing unit 242 may be configured to obtain original perceptual information perceived by one or more perceptual devices 260. The roadside computing unit 242 may be configured to obtain raw information perceived by one or more perceptual devices 260. The data transfer between the roadside computing unit 242 to the perceptual device 260 may be based on a wired line or a wireless communication connection. The roadside computing unit 242 may also be configured to process the information perceived from the perceptual device 260 and generate a driving-related message for the transportation means 130 based on the perceptual information.

The driving-related message may include at least one of the followings: the perceptual message indicating the perceptual result of the environmental around the transportation means 130, the decision planning information indicating the decision planning of the transportation means 130 when the transportation means 130 is driven, and the control message instructing the specific driving operation of the transportation means 130 when the transportation means 130 is driven. Based on the sequence of these three types of messages, the information indicated by each of the three types of messages depends on the information contained in the previous type of message. For example, the perceptual result of the environment is based on the information perceived by the perceptual device 260, the decision planning is based at least on the perceptual result of the environment, and the control messages are usually made on the basis of the decision planning or on the basis of the perceptual result of the environment. Depending on the computing capability and configuration of the roadside computing unit 242, the roadside computing unit 242 may perform one or more levels of computation on the basis of the information perceived by the perceptual device 260 to determine the perceptual information, the decision planning messages, and/or the control messages for the transportation means 130. The driving-related message determined by the roadside computing unit 242 may be further processed by other computing devices or even by the OBU as needed.

In some embodiments, the roadside computing unit 242 may use algorithms such as data fusion and obstacle perception to determine the environment perceptual results related to the transportation means 130 and generate perceptual messages. For example, the roadside computing unit 242 may perform direct obstacle perceptual processing and/or further semantic level perceptual processing on the original perceptual information. The obstacle perception includes identifying the size, shape, speed, etc. of the obstacle on the road, and the semantic level perceptual processing further includes determining a road condition based on the obstacle perceptual result, such as determining a zombie vehicle on the road, determining a special vehicle on the road, etc.

Depending on the source and specific content of the perceptual information, the perceptual message may include indication information related to one or more other aspects of the environment 100 and/or the transportation means 130 in the environment 100. In some embodiments, the perceptual messages can include one or more aspects of information: information related to obstacles existing in the environment 100, which indicates at least one of the type, location information, speed information, direction information, physical appearance description information, historical trajectory, and predicted trajectory of the obstacle; information related to a physical condition of a road in the environment 100, which indicates at least one of a road physical condition of the road and structured information of the road; information related to a traffic facility in the environment 100, which indicates at least one of a signal light status and a traffic sign on a road; information related to road traffic conditions in the environment 100, which indicates at least one of a lane sign, a traffic flow, and a traffic event associated with a road and/or a lane of the road; and information related to meteorological conditions in the environment 100. In some embodiments, the perceptual message may also include assistance information related to the location of the transportation means 130, diagnostic information for a malfunction of the transportation means 130, information related to a software system in the transportation means 130, and/or information related to time. Although some examples of the content contained in the perceptual message are listed above, it should be understood that the perceptual message may also include other content, including less or more content.

The decision planning message may include one or more aspects of the followings: an instruction related to the traveling road for applying the decision; the start time information and/or the end time information of the decision planning; the start position information and/or the end position information according to the decision planning; the identification of the transportation means to which the decision planning is directed; the decision information related to the driving behavior of the transportation means; the decision information related to the driving action of the transportation means; the information of the path planning trajectory point; the expected time to reach the path planning trajectory point; the information related to the other transportation means to which the decision planning is related; the map information; the time information, and the like. The map information may indicate, for example, at least one of an identification of the map, an update manner of the map, an area of the map to be updated, and location information. The identification of the map may include, for example, a version number of the map, an update frequency of the map, and so on. The updating manner of the map may, for example, indicate an updating source (the remote device 120 or another external source) of the map, an updating link, an updating time, and so on. Although some examples of the content contained in the decision planning message are listed above, it should be understood that the decision planning message may also include other content, including less or more content.

The control message may include one or more of following information: kinematic control information related to movement of the transportation means; dynamic control information related to at least one of a power system, a transmission system, a brake system, and a steering system of the transportation means; control information related to a riding experience of the passenger in the transportation means; control information related to a traffic warning system of the transportation means; and information related to time. Although some examples of the content contained in the control message are listed above, it should be understood that the control message may also include other content, including less or more content.

The roadside computing unit 242 may have communication with the roadside service node 212. The communication between the roadside computing unit 242 and the roadside service node 212 may be implemented through a wired or wireless network. The roadside computing unit 242 may transmit a driving-related message to the roadside service node 212 via communication with the roadside service node 212. In addition, the roadside computing unit 242 may also receive control signaling, information, data, and the like from the roadside service node 212. The roadside computing unit 242 may also forward the corresponding information to the OBU 132 through the RSU 250 based on the control of the roadside service node 212. In addition to the roadside computing unit 242, in some embodiments, the roadside computing module 240 may also include a RSU service node 214 for managing and controlling the RSU 250. The RSU service node 214 may be configured to support message interaction with the RSU 250.

The edge computing subsystem 230 in the driving control system 110 may include an edge computing module 270 that includes an edge computing device 272 and an RSU service node 214. The edge computing device 230 may also include one or more RSU 250 and one or more perceptual devices 260. In the edge computing subsystem 230, the RSU service node 214, RSU 250 and the perceptual device 260 have similar functions and deployment to those in the roadside subsystem 220. The edge computing device 272 is configured to provide computing functions for computing, in particular information associated with the transportation means 130. In some embodiments, the edge computing device 272 may be configured to process the information perceived by the perceptual device 260 and generate driving-related messages, such as perceptual messages, decision planning messages, and/or control messages, for transportation means 130 based on the perceptual information.

The edge computing device 272 may also be referred to as an edge computing node, which may be a server, a mainframe server, a network node such as an edge server, a cloud computing device such as a virtual machine (VM), and any other device that provides a computing capability. In a cloud environment, a remote device may sometimes also be referred to as a cloud device. In some embodiments, the edge computing device 272 may provide a more powerful computing capability and/or a more convenient access to the core network than the roadside computing unit 242. Thus, the edge computing device 272 may support fusion of the perceptual information for a larger geographic range. The edge computing device 272 may be deployed at the segment level, e.g., may be deployed in a machine room on an edge of a road segment.

The roadside subsystem 220 and the edge computing subsystem 230 interacted with the central platform subsystem 210 are described above. Each of the roadside subsystem 220 and the edge computing subsystem 230 may be regarded as a small local area network that is responsible for perceiving a particular geographic range of the environment 100 and performing the computing process based on the perceptual information so as to locally control the driving. Herein, the RSU 250 providing the communication function and the roadside computing unit 242 and the edge computing device 272 providing the computing function may be collectively referred to as "functional nodes"; and the nodes for serving these functional nodes, such as the roadside service node 212, the RSU service node 214 and the edge service node 216, may be collectively referred to as "service node".

In the driving control system 110, there may be one or more roadside subsystems 220 and one or more edge computing subsystems 230 interacting with the central platform subsystem 210. The central platform subsystem 210 may be considered to provide cloud capabilities to obtain multi-dimensional information (such as environmental perception, emergencies and the like,) related to the driving control of the transportation means 130 within multiple road segments, multiple regions, or even the entire city or larger geographic range. With the global road network information, the central platform subsystem 210 may provide more extension capabilities based on the global information. Such capabilities will be mentioned hereinafter.

### Examples of networking mode

In the driving control system 110, one or more roadside subsystems 220 and one or more edge computing subsystems 230 may be distributed, all of which may interact with the central platform subsystem 210. The connection of these subsystems to the central platform subsystem and the manner of deployment within each subsystem may vary as desired. An example of how the roadside subsystem and the edge computing subsystem are networked will be described below.

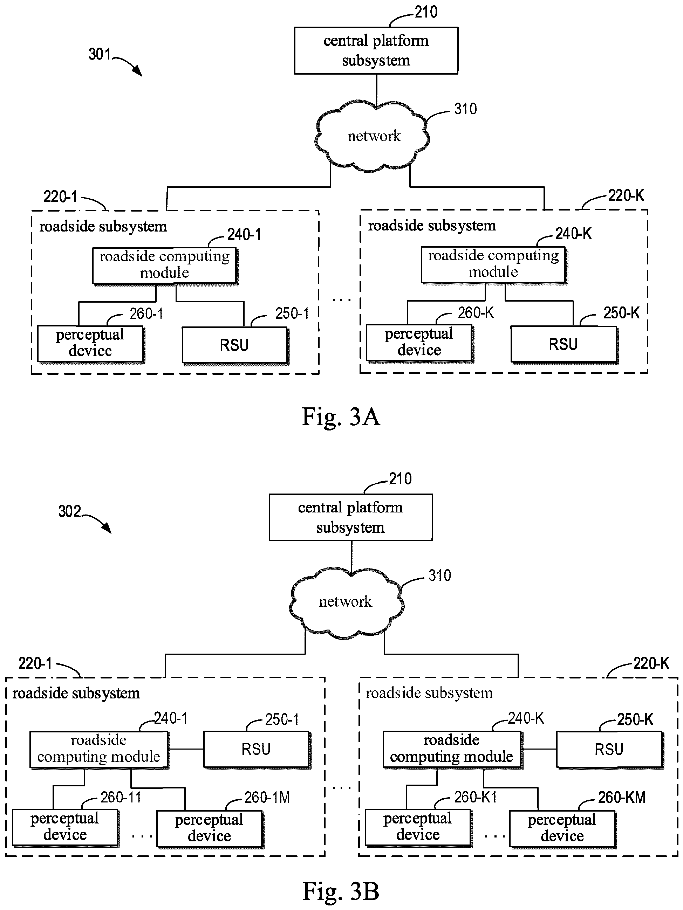

FIGS. 3A-3D illustrate an example networking associated with the roadside subsystem 220. In general, the networking within the roadside subsystem 220 may depend on the computing capability of the roadside computing device 242, the communication range supported by RSU 250, and/or the perceptual range supported by the perceptual device 260.

In the example networking 301 illustrated in FIG. 3A, the central platform subsystem 210 may communicate via the network 310 to a plurality of roadside subsystems (denoted as 220-1, ..., 220-K), each roadside subsystem 220 including a roadside computing module 240, a single perceptual device 260 and a single RSU 250. Here, K is an integer greater than or equal to 1. For example, in addition to the roadside computing module 240-1, the roadside subsystem 220-1 includes a single perceptual device 260-1 and a single RSU 250-1, both of which are communicatively coupled to the roadside computing module 240-1. In addition to the roadside computing module 240-K, the roadside subsystem 220-K includes a single perceptual device 260-K and a single RSU 250-K, both of which are communicatively coupled to the roadside computing module 240-K. The feature of such a networking arrangement is that the roadside subsystem 220 is deployed by using the perceptual range of the perceptual device 260 as a limitation. For example, if the perceptual range of the perceptual device 260 is 150m, then one roadside subsystem 220 is deployed every 150m on the road on which the transportation means 130 is traveling. In this example, it is assumed that the communication range of the RSU 250, in particular the direct communication range with the OBU 132, is larger than the perceptual range of the perceptual device 260, and this assumption is normally true. However, if the communication range is less than the perceptual range, the roadside subsystem 220 is deployed with the communication range of RSU 250 as a limitation.

In the example networking 302 illustrated in FIG. 3B, the computing capability of the roadside computing unit 242 in the roadside computing module 240 is more powerful than the networking example 301, and perceptual information from the plurality of perceptual devices 260 may be processed. Thus, in FIG. 3B, the roadside computing module 240-1 may be connected to a plurality of perceptual devices 260-11, ..., 260-1M, the roadside computing module 240-K may be connected to a plurality of perceptual devices 260-K1, ..., 260-KM, etc. Here, M is an integer greater than or equal to 1. The networking mode in Figure 3B is characterized in that it may make full use of the communication capabilities of the RSU 250 and the computing resource of the roadside computing unit 242. Thus, assuming that the communication range supported by the RSU 250 is 500m and the perceptual range of the perceptual device 260 is 150m, each roadside computing module 240 may support the processing of the perceptual information of three consecutive perceptual devices 260, and may provide one roadside subsystem 220 every 500m on the road traveled by the transportation means 130. Note that the number of perceptual devices connected to each roadside module 240 may be different.

In the example networking 303 illustrated in FIG. 3B, the perceptual device 260 and the roadside computing module 240 are deployed at each location according to the perceptual capability of the perceptual device 260, and a plurality of roadside computing modules 240 have one RSU. The deployment of the perceptual device 260 and the roadside computing module 240 is determined based on the perceptual range of the perceptual device 260, while the deployment of the entire roadside subsystem 220 is determined based on the communication range of the RSU 250. That is, in this networking mode, the RSU is not in a 1:1 relationship with the roadside computing module 240. This makes full use of the communication capabilities of the RSU 250. As illustrated in FIG. 3B, the roadside subsystem 220-1 includes a single RSU 250-1, a plurality of roadside computing modules 240-11, ..., 240-1M and perceptual devices 260-11, ... 260-1M which are connected respectively to these roadside computing modules. Similarly, the roadside subsystem 220-K includes a single RSU 250-K, a plurality of roadside computing modules 240-K1, ..., 240-KM and perceptual devices 260-K1, ... 260-KM which are connected respectively to these roadside computing modules.

In each roadside subsystem 220, one roadside computing module 240 may be designated as a main roadside computing module, and the other roadside computing modules 240 are slave roadside computing modules. The main roadside computing module may be determined by employing a master-slave mode or a dynamic election strategy. The main roadside computing module 240 is responsible for fusing the results of all computing units within the subnetwork, communicating directly with the RSU 250 and the central platform subsystem 210, and forwarding the information of the slave side computing module, and so on.

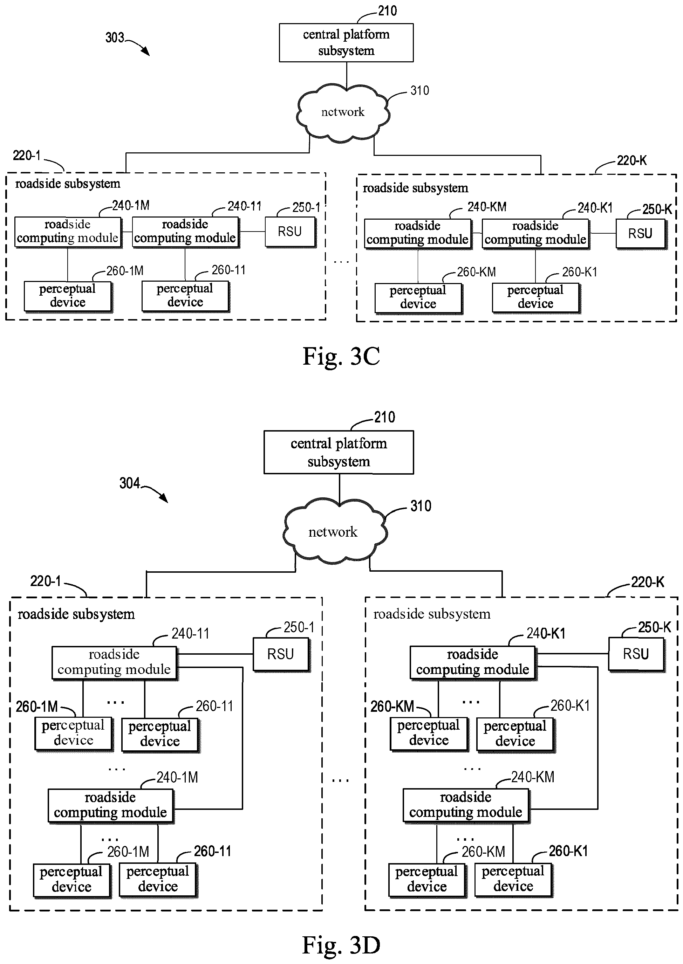

FIG. 3D also illustrates another example networking 304, which is similar to the example networking 303 of FIG. 3, except that each roadside computing module 240 may be connected to a plurality of perceptual devices 260 to process the perception information from the plurality of perceptual devices 260. This may further make full use of the computing resources of the roadside computing unit 242.

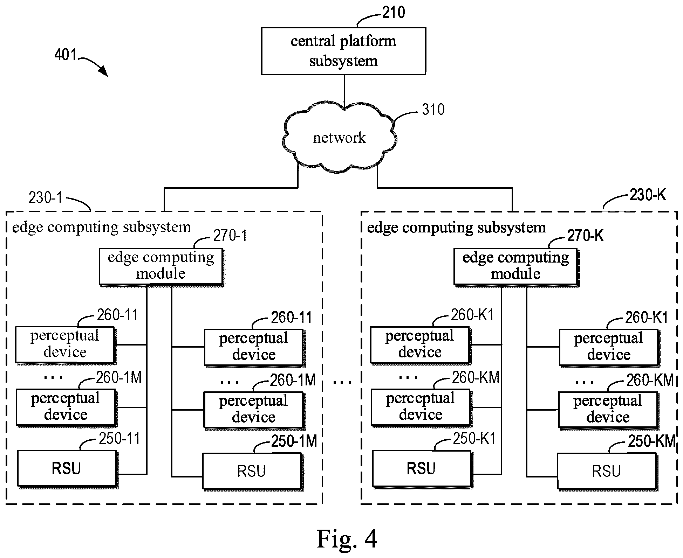

FIG. 4 illustrates an example networking 401 associated with an edge subsystem 230. In the example networking 401 illustrated in FIG. 4, the central platform subsystem 210 may be connected to a plurality of edge computing subsystems (denoted as 230-1, ... 230-K) via the network 310. Here, K is an integer greater than or equal to 1. Since the edge computing module 270 generally has more powerful computing capabilities and network coverage capabilities, the edge computing module 270 in each edge computing subsystem 230 may be coupled to a plurality of perceptual devices 260 to process the perceptual information from the plurality of perceptual devices 260 and include a plurality of RSU 250. For example, the edge computing subsystem 230-1 includes an edge computing module 270-1, and a first set of perceptual devices 260-11,... 260-1M, a second group of perceptual devices 260-11, ..., 260-1M, RSU 250-11 and RSU 250-1M, which are connected to the edge computing module 270-1. Here, M is an integer greater than or equal to 1. Similarly, the edge computing subsystem 230-K includes an edge computing module 270-K, and a first set of perceptual devices 260-K1, ... 260-KM, a second group of perceptual device s 260-K1, ..., 260-KM, RSU 250-K1 and RSU 250-KM, which are connected to the edge computing module 270-K. In each edge computing subsystem 230, multiple RSU 250 may provide a greater range of communications. Thus, the powerful computing capability of the edge computing device 272 may be sufficiently utilized to process the information from more perceptual devices to control the driving of transportation means within a wider geographic range.

Some example networking modes of the roadside subsystem 220 and the edge computing subsystem 230 have been described above. It should be understood that only a few examples are illustrated in the drawings, which do not pose a limitation on the embodiments of the present disclosure. In some implementations, these different networking modes may generally be used in the driving control system 110. For example, the central platform subsystem 210 in the driving control system 110 may be communicatively coupled via a network to one or more roadside subsystems 220 illustrated in one or more examples in FIGS. 3A-3D, and/or communicatively coupled to the edge computing subsystem 230 illustrated in FIG. 4D.

### Architecture of Service Node and Example of Interaction with functional node

As mentioned above, the RSU 250, the roadside computing unit 242, and the edge computing device 272 may be collectively referred to herein as functional nodes, while the nodes used to serve these functional nodes, such as the roadside service node 212, the RSU service node 214, and the edge service node 216, may be collectively referred to as service nodes. In the driving control system 110, the interaction between the various subsystems is mainly realized through the interaction between the service node and the functional node.

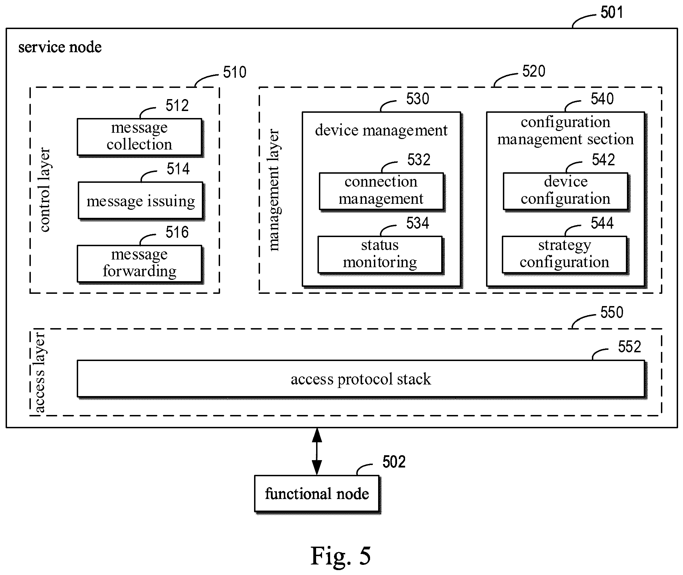

The service node has a corresponding architecture to support such interaction. FIG. 5 illustrates an example architecture of a service node 501 that interacts with a functional node 502. The service node 501 may be a roadside service node 212, a RSU service node 214, or an edge service node 216 in the driving control system 110 of FIG. 2. In some embodiments, the functions of some or all of the roadside service node 212, the RSU service node 214, and the edge service node 216 in the central platform subsystem 210 maybe integrated in a single service node 501. The embodiments of the present disclosure are not limited in this respect. The functional node 502 may be a RSU 250, a roadside computing unit 242, or an edge computing device 272 in the driving control system 110 of FIG. 2.

The architecture of the service node 501 illustrated in FIG. 5 may implement the information interaction among the various subsystems, provide a unified path for intra-subsystem interaction, provide a unified protocol and interface for the subsystem to interface externally, and implement management and message interaction with the functional nodes.

As illustrated in FIG. 5, the service node 501 is divided into a control layer 510, a management layer 520, and an access layer 550. The access layer 550 includes an access protocol stack 552 for supporting the access protocol of the functional node 502. The access layer 550 may integrate an access protocol stack corresponding to one or more access protocols to which each functional node 502 is adapted, based on the type of the functional node 502. In some embodiments, the functional node 502 includes a RSU 250, and the access protocol stack 552 may be a V2X related protocol supported by the RSU 250, such as a lightweight V2X protocol, including a LwM2M protocol, a mqtt protocol, and so on. The lightweight protocols may reduce node-side resource consumption. In some embodiments, the functional node 502, such as the RSU 250, the roadside computing unit 242, and/or the edge computing unit 272, supports network communication, so the access protocol stack 552 may be a network protocol stack, such as a Hypertext Transfer Protocol (HTTP) protocol stack, a Hypertext Secure Transfer (HTTPS) protocol stack, a cellular communication protocol stack, etc.

The management layer 520 relates to the device management section 530 and the configuration management section 540. The device management section 530 includes a connection management module 532 and a status monitoring module 534 for the functional node 502. The configuration management section 540 includes a device configuration module 542 and a strategy configuration module 544 for functional node 502. The control layer 510 is used to control the message collection module 512, the message delivery module 514, and the message forwarding module 516 of the service node 501.

The specific functions of the layers of the service node 501 will be described in detail below in connection with interaction with the functional node 502.

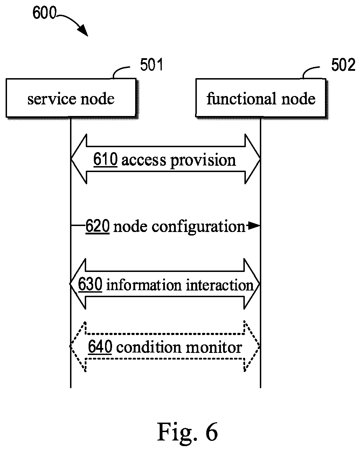

FIG. 6 illustrates a signaling diagram 600 between a service node 501 and a functional node 502 in accordance with some embodiments of the present disclosure. In the embodiment of FIG. 6, the service node 501 may be any of the roadside service node 212, the RSU service node 214, and the edge service node 216, and the functional node 502 may be any of the RSU 250, the roadside computing unit 242, and the edge computing device 272.

At 610, the service node 501 provides an access to the functional node 502 based on the access protocol supported by the functional node 502. The functional node 502 does not establish a communication coupling with the service node 501 until the functional node 502 accesses the service node 501. In some embodiments, during the access provision 610, the functional node 502 may send an access request to the service node 501 based on the corresponding access protocol. The access protocol stack 552 in the access layer 550 of the service node 501 processes the access request. In some embodiments, the service node 501 may perform a verification of access authorization for the functional node 502 in response to the access request. This maybe implemented, for example, by the connection management module 534 in the device management section 530. In response to the access authorization being authenticated, the service node 501 may provide the access to the functional node 502. Thus, the functional node 502 may be connected to the service node 501 and communicate with the service node 501.

At 620, the service node 501 transmits configuration information for the functional node to the functional node 502 based on the provided access. The provision of the configuration information may be implemented, for example, by the configuration management section 540 of the service node 501.

In some embodiments, the device configuration 542 in the configuration management section 540 may be configured to send first configuration information (also referred to as device configuration information) to the functional node 502 for configuring communication resources and/or computing resources of the functional node 502. For example, in the case where the functional node 502 includes the RSU 250, the first configuration information may be used to configure the transmit power of the RSU 250, thereby controlling the communication range of the RSU 250. In the case where the functional node 502 includes either the roadside computing unit 242 or the edge computing device 272, the first configuration information may configure the computing resources, e.g., to reserve a portion of the computing resources for subsequent calculations.

In some embodiments, the strategy configuration 544 in the configuration management section 540 may be configured to send second configuration information (also referred to as strategy configuration information) to the functional node 502 for configuring the message interaction strategy of the functional node 502. The message interaction strategy may include a message collection strategy of the service node 501 to the functional node 502, a message issuing strategy, and a message forwarding strategy. For example, for message collection and/or issuing, the second configuration information may configure a start time, a sampling interval, a data type, a priority transmission, a transmission frequency, and so on. For message forwarding, the second configuration information may set a validity period of a message to be forwarded, a start transmission time, a repetition period within a transmission time, a transmission frequency, and the like.

In some embodiments, after the functional node 502 receives the configuration information, the functional node sets itself with the configuration information, and may also return feedback information to the service node 501.

At 630, the service node 501 may control message interaction with the functional node 502 based on configuration information to facilitate the driving control of the transportation means 130 by the OBU. The message interaction between the service node 501 and the functional node 502 may include message collection, message issuing, and message forwarding. The "message collection" means that the service node 501 receives messages from one or more functional nodes 502, which report messages to the service node 501 in accordance with a message collection strategy. The "message issuing" means that the service node 501 issues a message to the functional node 502, which may be controlled by a message delivery strategy. The "message forwarding" means that the service node 501 forwards the messages across the functional nodes, which occurs when two functional nodes 502 need to communicate. The "message forwarding" may be controlled by a message forwarding strategy. The message interaction process between the service node 501 and the functional node 502 will be described in detail below.

In some possible embodiments, at 640, the service node 501 also performs state monitoring of the functional node 502 to detect whether the functional node 502 is in an online state, an offline state, a fault state, or other state. The status monitoring maybe performed by the status monitoring module 534 in the service node 501. During status monitoring, the functional node 502 may periodically report its status to the service node 501. The service node 501 may update the local status information corresponding to the functional node 502 based on the received status report, and record the latest status of the functional node 502. In some embodiments, the functional node 502 may transmit a status report to the service node 501 in response to an update request from the service node 501. For example, if the service node 501 does not receive a status report from a certain functional node 502 for a long time (e.g., beyond a certain time threshold), the service node 501 may actively detect the status report of the service node 501 by sending an update request.

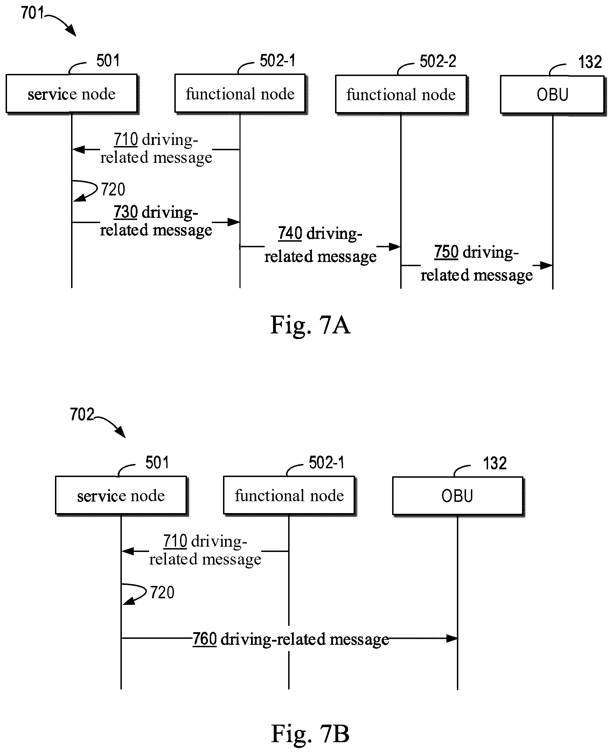

Referring to FIGS. 7A and 7B, a message interaction process between the service node 501 and the functional node 502 is described, which also involves the OBU 132 to support the driving control of the transportation means 130 carrying the OBU 132. The difference in the message interaction process is related to the communication capability of the OBU 132.

In the signaling diagram 701 illustrated in FIG. 7A, the functional node 502-1 is, for example, a roadside computing unit 242 or an edge computing device 272 providing a computing function, and the functional node 502-2 is, for example, a RSU 250 providing a communication capability. Functional nodes 502-1 and 502-2 may be included in roadside subsystem 220 or edge computing subsystem 230. Thus, the service node 501 may include a roadside computing unit 242 or an edge computing device 272. In this example, the OBU 132 has a communication connection with the functional node 502-2. Such a communication connection may be, for example, a V2X communication connection.

At 710, the functional node 502-1 transmits a driving-related message (also referred to herein as a first driving-related message, for convenience of discussion) to the service node 501 for the transportation means 130. The first driving-related message may be at least one of a perceptual message, a decision planning message, and/or a control message for the transportation means 130 determined by the functional node 502-1. The first driving-related message is determined by the functional node 502 based on the perceptual information of the perceptual device 260 in the located subsystem 220 or 230.

After receiving the first driving-related message from the functional node 502-1, at 720, the service node 501 determines another driving-related message for the transportation means 130 by processing the first driving-related message (also referred to herein as second driving-related message, for convenience of discussion). The second driving-related message may be different from the first driving-related message, and may also include at least one of a perceptual message, a decision planning message, and/or a control message for the transportation means 130. For example, the first driving-related message may be a perceptual message for the transportation means 130, and the second driving-related message may be a decision planning message and/or a control message for the transportation means 130 determined on the basis of the perceptual message. For another example, the first driving-related message may be a driving-planning message, and the second driving-related message may be a control message for the transportation means 130. In such an example, the service node 501 provides further computing capability.

In some embodiments, the service node 501 may also receive a driving-related message (also referred to herein as third driving-related message for ease of discussion) from another functional node 502 for another transportation means 130. The service node 501 may process the first driving-related message and the third driving-related message to determine the first driving-related message. With more driving-related information, the service node 501 may implement more customized services based on such global information. This may be implemented, for example, by a specialized service module in the service node 501. For example, based on the message from the plurality of functional nodes, the service node 501 may determine the overall traffic congestion status, road traffic flow notification, lane adjustment status, signal light alert, road abnormality status, road construction status, and the like of the specific area related to global traffic. Thus, the service node 501 may determine whether to adjust the travel path and/or a specific driving operation of the specific transportation means 130, and generate a second driving-related message based thereon.

At 730, the service node 501 provides the second driving-related message to the functional node 502-1, such as the roadside computing unit 242 in the roadside subsystem 220 or the edge computing device 272 in the edge computing subsystem 230. At 740, the functional node 502-1 transmits the second drive-related message to the functional node 502-2, which may be implemented, for example, within the local area network of the subsystem 220 or 230. At 750, the functional node 502-2, e.g., RSU 250, transmits a second driving-related message to the OBU 132. In an embodiment, the functional node 502-2 may broadcast a second driving-related message to the OBU 132. After receiving the second driving-related message, the OBU 132 may perform the driving control of the transportation means 130 according to the second driving-related message.

In the embodiment illustrated in FIG. 7B, it is assumed that the OBU 132 has a communication connection with the service node 501. In such the embodiment, the OBU 132 may have networking capabilities, for example, the OBU 132 may access the Internet through an application program on a user terminal device or an on-board central control platform or the like to obtain a communication connection with the service node 501. In the signaling diagram 702 of FIG. 7B, the operations at 710 and 720 are similar to the signaling diagram 701. After the service node 501 determines the second driving-related message, the second driving-related message may be transmitted to the OBU 132 via a communication connection with the OBU 132.

In some embodiments, in addition to interacting with the service node 501, controlling the driving of the transportation means 130 may also be implemented within the roadside subsystem 220 and/or the edge computing subsystem 230. The driving-related message determined by the roadside computing unit 242 and/or the edge computing device 272 may be provided directly to the OBU 132 via the RSU 250. The OBU 132 may further process the received drive-related message or control the transportation means 130 directly based on the message. Such typical application scenarios include collaborative perception, semantic level perceptual result sharing, and the like. The "collaborative perception" means that the roadside subsystem 220 shares the perceptual global information with the transportation means, as a complement to the perception of the transportation means; and the "semantic level perceptual result sharing" means that the roadside subsystem identifies the perceptual results at the semantic level and shares the identification results with the transportation means, for example, the roadside subsystem 220 identifies the roadside zombie transportation means and shares the identification results, identifies the engineering vehicles and the ambulance vehicles and the like, and shares the identification results.

### Examples of docking with a third platform

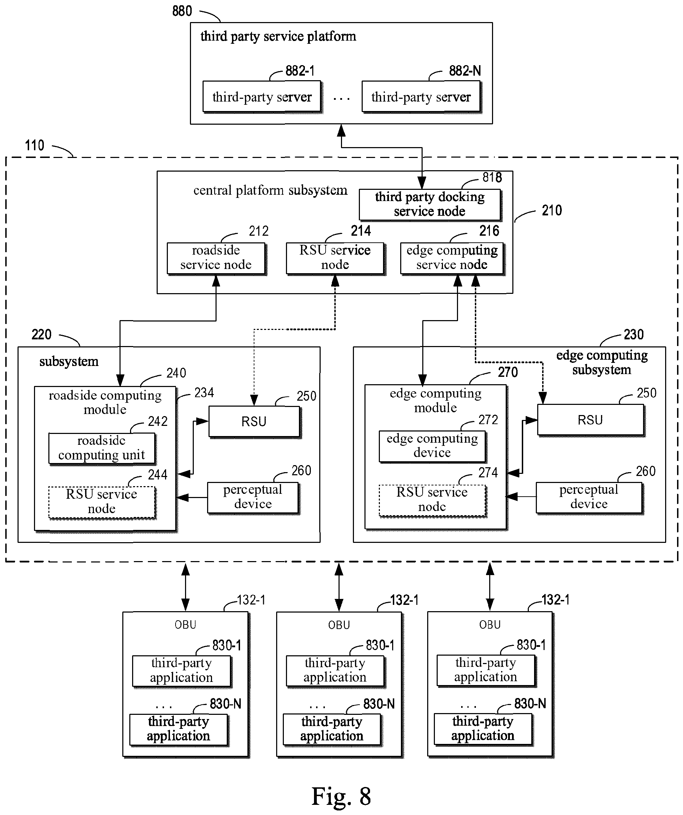

In some embodiments, the driving control system 110 according to embodiments of the present disclosure may also dock a third party platform. FIG. 8 illustrates such an embodiment. As illustrated in FIG.8, the central platform subsystem 210 of the driving control system 110 further includes a third party docking service node 818 for docking the third party service platform 880. The third party service platform 880 may include one or more third party service clients 882-1,..., 882-N (collectively or individually referred to as a third party service end 882 for ease of discussion). Each third party server 882 may provide a corresponding third party service, such as a map service, a navigation service, a traffic supervision service, etc. The third party docking service node 818 is configured to control, manage, and interact messages with the third party server 882. The structure of the third party docking service node 818 may be similar to the service node 501 illustrated in FIG.5. The central platform subsystem 210 may provide data support for the third-party platform 880 and may provide a more flexible and convenient access to the interaction between the third-party platform 880 and the transportation means 130.

In some embodiments, the OBU 132 may have networking capabilities and may communicate with the third party platform 880. For example, one or more OBU 132 may be provided with the third-party applications 830-1, ..., 830-N, which correspond to the service provided by the corresponding service terminal of the third-party platform 880 (collectively or individually referred to as a third-party application 830 for convenience of discussion). The OBU 132 may communicate with the third-party platform 880 via the third-party application 830.

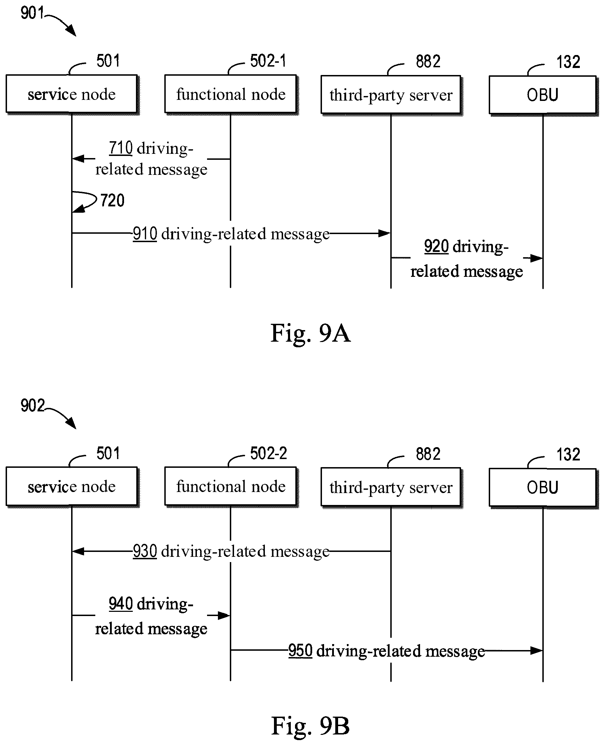

FIG. 9A illustrates a signaling diagram 901 in an embodiment having a communication connection between the OBU 132 and the third party platform 880. The signaling diagram 901 inherits the operations 710 and 720 in the signaling diagrams 701 and 702, where the service node 501 determines a second driving-related message for the transportation means 130 based on the first driving-related message from the functional node 502-1. The service node 501 desires to provide a second driving-related message to the OBU 132 in the corresponding transportation means 130. In the embodiment of FIG. 9A, such message provision may be implemented via a third party platform 880, in particular a third party server 882 in a third party platform. As illustrated in FIG. 9a, at 910, the service node 501 transmits the second driving-related message to the third-party service end 882. The service node 501 and the third party service end 882 may communicate via a wired or wireless network. After receiving the second driving-related message, the third-party service end 882 forwards the second driving-related message to the OBU 132 via the corresponding communication connection at 920. Thus, the third-party platform achieves more flexible driving assistance.

As a specific example, taking the traffic light reminding function as an example, the first driving-related message uploaded by the functional node 502-1 includes the traffic light status on the geographical area or the driving path where the transportation means 130 is located. The service node 501 may provide the traffic light status-related information as a second driving-related message to the third party service end 882, after performing the corresponding message transition of the information or without any process of the information. The third party service end 882 may then provide the traffic light status to the OBU 132. For example, the third party server 882 may provide a map service, and therefore may push the traffic light status information to the map application installed on the OBU 132. By means of the map application, the traffic light status on the corresponding geographical area or path can be displayed in real time.

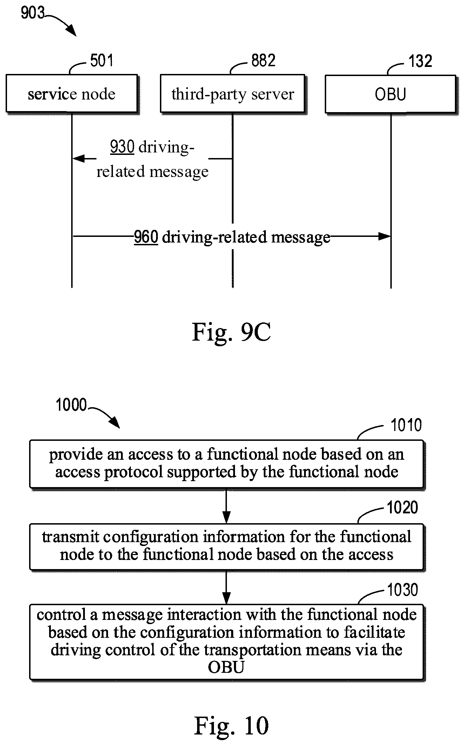

In other embodiments, there is no communication connection between the third party platform 880 and the OBU 132. In this case, the third-party platform 880, such as the third-party service end 882, may also provide a driving-related message to the OBU 132 via the driving control system 110. FIGS. 9B and 9C illustrate such an embodiment.

In the signaling diagram 902 illustrated in FIG. 9B, the OBU 132 has a communication connection with a functional node 502-2 (e.g., RSU 250). At 930, the service node 501 receives a driving-related message (also referred to as a fourth driving-related message for ease of discussion) for the transportation means 130 from the third-party server 882. The fourth driving-related message may include, for example, information related to the perceptual message, but may not be determined by the perceptual information of the perceptual device, but is generated by the third-party platform 880. In some examples, the fourth driving-related message may include, for example, a notification of temporary road closure by the traffic control department, which is related to information on the status of road availability. The fourth driving-related message may also include temporary adjustment of the road speed limit, emergency broadcast, and the like.

At 940, the service node 501 may forward the fourth drive-related message to the functional node 502-2 (e.g., the RSU 250) of the subsystem 220 or 230. The selection of the functional node 502-2 may be related to the geographic location of the transportation means 130 such that the OBU 132 on the transportation means 130 is in the communication range of the functional node 502-2. The functional node 502-2 forwards the fourth driving-related message to the OBU 132 at 950 so that the OBU 132 may perform corresponding driving control, such as adjusting a route, or the like, according to the fourth driving-related message.

In the signaling diagram 903 illustrated in FIG. 9C, the OBU 132 has a network communication connection with the service node 501. At 930, the service node 501 receives the fourth driving-related message for the transportation means 130 from the third-party service end 882, and the service node 501 may then forward the fourth driving-related message to the OBU 132 via a communication connection with the OBU 132 at 960.

### Example of process

FIG. 10 illustrates a flow diagram of a method 1000 for controlling driving according to an embodiment of the present disclosure. The method 1000 may be implemented at the service node 501 of FIG. 5, which may be the roadside service node 212, RSU service node 214, edge computing service node 216, and/or third party docking service node 818 in driving control system 110. It shall be understood that although illustrated in a particular order, some of the steps in method 1000 may be performed in a different order than illustrated or in parallel. The embodiments of the present disclosure are not limited in this respect.

At block 1010, the service node 501 provides an access to a functional node based on an access protocol supported by the functional node, the functional node being configured to provide a communication function with the on-board unit OBU of the transportation means or to provide a computing function for information associated with the transportation means. At block 1020, the service node 501 transmits configuration information for the functional node to the functional node based on the access. At block 1030, the service node 501 controls message interaction with the functional node based on the configuration information to facilitate the driving control of the transportation means via the OBU.

In some embodiments, the functional node includes at least one of a roadside computing unit and an edge computing device, where each of the roadside computing unit and the edge computing device is configured to provide a computing function.

In some embodiments, the functional node includes a roadside unit RSU configured to provide a communication function. In some embodiments, the service node is included in at least one of a roadside computing unit, an edge computing device, and a central platform, where the RSU is configured to provide communication between at least one of the roadside computing unit or the edge computing device, and OBU.

In some embodiments, the functional node is deployed in the environment in which the transportation means is located based on at least one of the following: a communication range supported by the functional node; a computing capability of the functional node; and a perceptual range supported by a perceptual device associated with the functional node configured to process perceptual information from the perceptual device.

In some embodiments, the step of providing access includes: receiving an access request from a functional node based on an access protocol supported by the functional node; performing, in response to the access request, a verification of the access authorization of the functional node; and providing access in response to the access authorization being authenticated.

In some embodiments, process 1000 further includes receiving a status report from the functional node, the status report being received periodically or in response to an update request from the service node; and updating the local status information corresponding to the functional node based on the status report.

In some embodiments, the step of transmitting configuration information for the functional node includes at least one of following: transmitting first configuration information for the functional node to configure at least one of a communication resource and a computing resource of the functional node; and transmitting second configuration information of the functional node to configure a message interaction strategy for the functional node.

In some embodiments, the step of controlling the message interaction with the functional node includes receiving a first driving-related message for a transportation means from the functional node; and determining a second driving-related message for the transportation means by processing the first driving-related message, the second driving-related message being different from the first driving-related message.

In some embodiments, the step of controlling the message interaction with the functional node further includes causing the functional node to transmit a second driving-related message to the OBU via a communication connection between the OBU and the functional node, for the driving control of the vehicle. In some embodiments, the process 1000 further includes transmitting a second drive-related message to the OBU via a communication connection between the OBU and the service node. In some embodiments, the process 1000 further includes transmitting a second drive-related message to the OBU via a communication connection between the OBU and a third-party platform.

In some embodiments, the step of determining a second driving-related message includes receiving a third driving-related message for another transportation means from another functional node; and determining the second driving-related message by processing the first driving-related message and the third driving-related message.

In some embodiments, the service node has a communication connection with the OBU, and the process 1000 further includes receiving a fourth driving-related message for the transportation means from the third-party platform via the communication connection with the third-party platform; and providing the fourth driving related message to the OBU.

In some embodiments, the first driving-related message is determined based on perceptual information collected by at least one perceptual device associated with the functional node, the at least one perceptual device being deployed in the environment in which the transportation means is located.

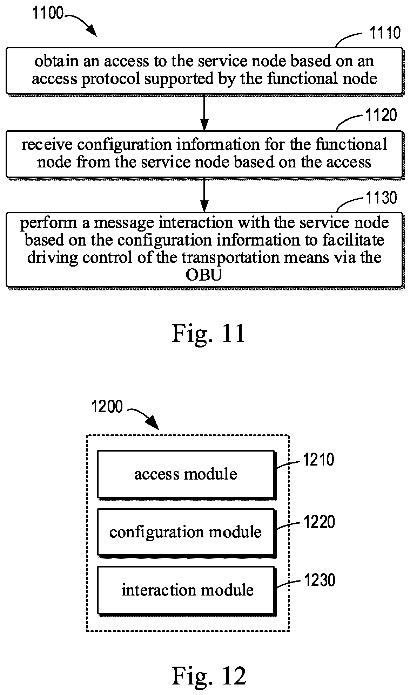

FIG. 11 illustrates a flow diagram of a method 1100 for controlling driving according to an embodiment of the present disclosure. The method 1100 may be implemented at a functional node 502 in FIG. 5, which may be a RSU 250, a roadside computing unit 242, or an edge computing device 272 in the driving control system 110. It shall be understood that although illustrated in a particular order, some of the steps in method 1100 may be performed in a different order than illustrated or in parallel. The embodiments of the present disclosure are not limited in this respect.

At block 1110, the functional node 502 obtains an access to the service node based on an access protocol supported by the functional node, the functional node being configured to provide a communication function with the on-board unit OBU of the transportation means or to provide a computing function for information associated with the transportation means. At block 1120, the functional node 502 receives configuration information for the functional node from the service node based on the access. At block 1130, the functional node 502 performs a message interaction with the service node based on the configuration information to facilitate the driving control of the transportation means via the OBU.

In some embodiments, the functional node includes at least one of a roadside computing unit and an edge computing device, each of the roadside computing unit and the edge computing device being configured to provide a computing function.

In some embodiments, the functional node includes a roadside unit RSU, which is configured to provide a communication function. In some embodiments, the service node is included in at least one of a roadside computing unit, an edge computing device, and a central platform, where the RSU is configured to provide communication between at least one of the roadside computing unit or the edge computing device, and the OBU.

In some embodiments, the functional node is deployed in the environment in which the transportation means is located based on at least one of the following: a communication range supported by the functional node; a computing capability of the functional nodes and a perceptual range supported by a perceptual device associated with the functional node configured to process perceptual information from the perceptual device.

In some embodiments, the step of obtaining access includes: transmitting the access request to a service node based on an access protocol supported by the functional node; and obtaining access in response to the access authorization for the functional node being authenticated by the service node.

In some embodiments, process 1100 further includes periodically or in response to an update request from the service node, transmitting a status report to the service node to update local status information maintained by the service node corresponding to the functional node.

In some embodiments, the step of receiving configuration information for the functional node includes at least one of the following: receiving first configuration information for the functional node to configure at least one of a communication resource and a computing resource for the functional node; and receiving second configuration information for the functional node to configure a message interaction strategy for the functional node.

In some embodiments, the step of performing a message interaction with the service node includes transmitting a first driving-related message for the transportation means to the service node .

In some embodiments, the functional node has a communication connection with the OBU, where the step of performing message interaction with the service node further comprises receiving a second driving-related message for the transportation means from the service node, the second driving-related message being determined by the service node based on the first driving-related message and the third driving-related message for another transportation means; and forwarding the second driving-related message to the OBU via the communication connection.

In some embodiments, the service node has a communication connection with the OBU, where the step of controlling message interaction with the functional node includes obtaining a fourth driving related message for the for the transportation means from the service node, the fourth driving related message being provided by the third party platform.

In some embodiments, the first driving-related message is determined based on the perceptual information collected by at least one perceptual device associated with the functional node, and at least one perceptual device is deployed in the environment in which the vehicle is located.

### Examples of apparatus and device

FIG. 12 illustrates a schematic block diagram of an apparatus 1200 for controlling driving according to an embodiment of the present disclosure. The apparatus 1200 may be included in or implemented as the roadside subsystem 112 in FIGS. 1 and 2. As illustrated in FIG. 12, the apparatus 1200 includes an access module 1210 configured to provide, at a service node, an access to a functional node based on an access protocol supported by the functional node, and the functional node is configured to provide a communication function with an on-board unit OBU of a transportation means or to provide a computing function for information associated with the transportation means. The apparatus 1200 also includes the configuration module 1220, which is configured to transmit the configuration information to the functional nodes based on the access. The apparatus 1200 further includes an interaction module 1230, which is configured to control a message interaction with the functional node based on the configuration information to facilitate the driving control of the vehicle via the OBU.

In some embodiments, the functional node includes at least one of a roadside computing unit and an edge computing device, each of the roadside computing unit and the edge computing device being configured to provide a computing function.

In some embodiments, the functional node includes a roadside unit RSU, which is configured to provide a communication function. In some embodiments, the service node is included in at least one of a roadside computing unit, an edge computing device and a central platform, where the RSU is configured to provide communication between at least one of the roadside computing unit or the edge computing device, and OBU.

In some embodiments, the functional node is deployed in the environment in which the transportation means is located based on at least one of the following: a communication range supported by the functional node; a computing capability of the functional node; and a perceptual range supported by a perceptual device associated with a functional node, and the functional node is configured to process the perceptual information from the perceptual device.

In some embodiments, the access module 1210 includes: a request receiving module is configured to receive an access request from a functional node based on an access protocol supported by the functional node; an authentication module configured to perform a verification of the access authorization for the functional node in response to the access request; and a verification-based access module configured to provide access in response to the access authorization being authenticated.

In some embodiments, the apparatus 1200 further includes: a report receiving module configured to receive a status report from a functional node, the status report being received periodically or in response to an update request from a service node; and a status updating module configured to update the local status information corresponding to the functional node based on the status report.

In some embodiments, the configuration module 1220 includes at least one of the following: a device configuration module, which is configured to transmit first configuration information for a functional node to configure at least one of a communication resource and a computing resource of the functional node; and a strategy configuration module configured to transmit the second configuration information for the functional node to configure the message interaction strategy of the functional node.

In some embodiments, the interaction module 1230 includes a first message receiving module configured to receive a first driving-related message for a transportation means from a functional node; and a first message processing module configured to determine a second driving-related message for the transportation means by processing the first driving-related message, the second driving-related message being different from the first driving-related message.

In some embodiments, the interaction module 1230 is further configured to cause the functional node to transmit a second driving-related message to the OBU via a communication connection between the functional node and the OBU, for the driving control of the transportation means. In some embodiments, the apparatus 1200 further includes a first message transmission module configured to transmit a second drive-related message to the OBU via a communication connection between the OBU and a service node. In some embodiments, the apparatus 1200 further includes a second message transmission module configured to transmit a second drive-related message to the OBU via a communication connection between a third party platform and the OBU.

In some embodiments, the message processing module includes a second message receiving module, which is configured to receive a third driving-related message for another transportation means from another functional node; and a second message processing module, which is configured to determine the second driving-related message by processing the first driving-related message and the third driving-related message.

In some embodiments, the service node has a communication connection with the OBU, and the apparatus 1200 further comprises a third message receiving module, which is configured to receive a fourth driving-related message for the transportation means from the third party platform via the communication connection with the third party platform; and a message provision module, which is configured to provide a fourth driving-related message to the OBU.

In some embodiments, the first driving-related message is determined based on perceptual information collected by at least one perceptual device associated with the functional node, the at least one perceptual device being deployed in the environment in which the transportation means is located.

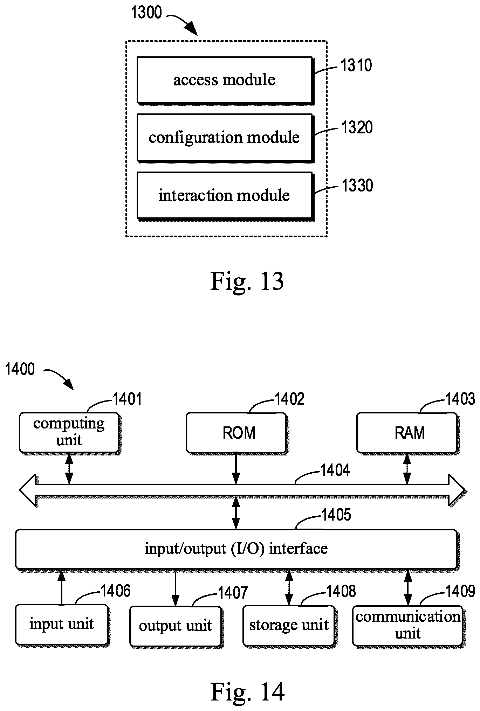

FIG. 13 illustrates a schematic block diagram of an apparatus 1300 for controlling driving according to an embodiment of the present disclosure. The apparatus 1300 may be included in or implemented as the on-board subsystem 132 of FIGS. 1 and 2. As illustrated in FIG. 13, the apparatus 1300 includes an access module 1320, which is configured to obtain access to a service node at a functional node based on an access protocol supported by the functional node, and the functional node is configured to provide a communication function with an on-board unit OBU of a transportation means or to provide a computing function for information associated with the transportation means. The apparatus 1300 further includes a configuration module 1320 configured to receive configuration information for the functional node from the service node based on the access. The apparatus 1300 further includes an interaction module 1330 configured to perform a message interaction with the service node based on the configuration information to facilitate the driving control of the vehicle via the OBU.

In some embodiments, the functional node includes at least one of a roadside computing unit and an edge computing device, and each of the roadside computing unit and the edge computing device is configured to provide a computing function.

In some embodiments, the functional node includes a roadside unit RSU, and the RSU is configured to provide a communication function. In some embodiments, the service node is included in at least one of a roadside computing unit, an edge computing device, and a central platform, and the RSU is configured to provide communication between at least one of the roadside computing unit or the edge computing device, and OBU.

In some embodiments, the functional node is deployed in the environment in which the transportation means is located based on at least one of the following: the communication range supported by the functional node; the computing capability of the functional node; and the perceptual range supported by the perceptual device associated with the functional node configured to process perceptual information from the perceptual device.

In some embodiments, the access module 1320 includes a request transmission module configured to transmit an access request to the service node based on an access protocol supported by the functional node; and a verification module configured to obtain access in response to the access authorization to the functional node being authenticated by the service node.

In some embodiments, the apparatus 1300 further includes: a report transmission module configured to transmit a status report to a service node periodically or in response to an update request from the service node to update local status information maintained by the service node corresponding to the functional node.

In some embodiments, the configuration module 1320 includes at least one of the following: a device configuration module, which is configured to receive first configuration information for the functional node to configure at least one of a communication resource and a computing resource of the functional node; and a strategy configuration module, which is configured to receive second configuration information for the functional node to configure a message interaction strategy for the functional node.

In some embodiments, the interaction module 1330 includes a message transmission module which is configured to transmit a first driving-related message for the transportation means to the service node .

In some embodiments, the functional node has a communication connection with the OBU, where the interaction module further includes: a message receiving module which is configured to receive a second driving-related message for the transportation means from the service node, the second driving-related message being determined by the service node based on the first driving-related message and the third driving-related message for another transportation means; and a message forwarding module which is configured to forward the second driving-related message to the OBU via the communication connection.

In some embodiments, the service node has a communication connection with the OBU, where the interaction module includes a message obtaining module which is configured to obtain a fourth driving-related message for the transportation means from the service node, the fourth driving-related message being provided by the third party platform.

In some embodiments, the first driving-related message is determined based on perceptual information collected by at least one perceptual device associated with the functional node, the at least one perceptual device being deployed in the environment in which the transportation means is located.

FIG. 14 illustrates a schematic block diagram of an example device 1400 that may be used to implement embodiments of the present disclosure. The device 1400 may be used to implement the service node 501 or the functional node 502 in FIG. 5. As illustrated, the device 1400 includes a computing unit 1401 that may perform various appropriate actions and processes in accordance with computer program instructions stored in a read-only memory (ROM) 1402 or computer program instructions loaded into a random access memory (RAM) 1403 from a storage unit 1408. In RAM 1403, various programs and data required for operation of the device 1400 may also be stored. The computing units 1401, ROM 1402 and RAM 1403 are connected to each other via a bus 1404. An input/output (I/O) interface 1405 is also connected to bus 1404.

A plurality of components in the device 1400 are connected to the I/O interface 1405, including an input unit 1406, such as a keyboard, a mouse, and the like; output units 1407, such as various types of displays, speakers, and the like; a storage unit 1408, such as a magnetic disk, an optical disk, or the like; and a communication unit 1409, such as a network card, a modem, or a wireless communication transceiver. The communication unit 1409 allows the device 1400 to exchange information/data with other devices over a computer network such as the Internet and/or various telecommunications networks.

The computing unit 1401 may be various general-purpose and/or special-purpose processing components having processing and computing capabilities. Some examples of computing units 1401 include, but are not limited to, central processing units (CPUs), graphics processing units (GPUs), various specialized artificial intelligence (AI) computing chips, various computing units running machine learning model algorithms, digital signal processors (DSPs), and any suitable processors, controllers, microcontrollers, and the like. computing unit 1401 performs the various methods and processes described above, such as process 1000 or process 1100. For example, in some embodiments, process 1000 or process 1100 may be implemented as a computer software program tangibly embodied in a machine-readable medium, such as storage unit 1408. In some embodiments, some or all of the computer program may be loaded and/or installed on the device 1400 via the ROM 802 and/or the communication unit 1409. When the computer program is loaded into the RAM 1403 and executed by the computing unit 1401, one or more steps of the process 1000 or the process 11000 described above may be performed. Alternatively, in other embodiments, computing unit 1401 may be configured to execute process 1000 or process 1100 by any other suitable means (e.g., by means of firmware).

The functions described above herein may be performed at least in part by one or more hardware logic components. For example, without limitation, example types of hardware logic components that may be used include field programmable gate arrays (FPGAs), application specific integrated circuits (ASICs), application specific standard products (ASSP), system on chip systems (SOCs), load programmable logic devices (CPLDs), and the like.

The program code for carrying out the methods of the present disclosure may be written in any combination of one or more programming languages. These program codes may be provided to a processor or controller of a general purpose computer, special purpose computer, or other programmable data processing apparatus such that the program code, when executed by the processor or controller, causes the functions/operations specified in the flowchart and/or block diagram to be implemented. The program code may be executed entirely on the machine, partly on the machine, partly on the machine as a stand-alone software package and partly on the remote machine or entirely on the remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination of the foregoing. More specific examples of machine-readable storage media may include one or more line-based electrical connections, portable computer disks, hard disks, random access memory (RAM), read-only memory (ROM), erasable programmable read-only memory (EPROM or flash memory), optical fibers, portable compact disk read-only memory (CD-ROM), optical storage devices, magnetic storage devices, or any suitable combination of the foregoing.

Furthermore, although operations are depicted in a particular order, this should be understood to require that such operations be performed in the particular order shown or in a sequential order, or that all illustrated operations should be performed to achieve the desired results. In certain circumstances, multitasking and parallel processing may be advantageous. Likewise, while several specific implementation details have been included in above descriptions, these should not be construed as limiting the scope of the disclosure. Certain features described in the context of separate embodiments may also be implemented in combination in a single implementation. Conversely, various features described in the context of a single implementation may also be implemented in multiple implementations alone or in any suitable subcombination.

Although the subject matter has been described in language specific to structural features and/or methodological logical acts, it is to be understood that the subject matter defined in the appended claims is not necessarily limited to the specific features or acts described above. Rather, the specific features and acts described above are merely example forms of implementing the claims.

## Claims

1. A method for controlling driving, comprising:
providing, at a service node, an access to a functional node based on an access protocol supported by the functional node, wherein the functional node is configured to provide a communication function with an on-board unit, OBU, of a transportation means or to provide a computing function for information associated with the transportation means;
transmitting, based on the access, configuration information for the functional node to the functional node; and
controlling, based on the configuration information, a message interaction with the functional node to facilitate controlling the driving of the transportation means via the OBU.

2. The method of claim 1, wherein the functional node comprises at least one of a roadside computing unit or an edge computing device, wherein each of the roadside computing unit and the edge computing device is configured to provide the computing function.

3. The method of claim 1, wherein the functional node comprises a roadside unit, RSU, configured to provide the communication function; and
wherein the service node is comprised in at least one of a roadside computing unit, an edge computing device or a central platform, wherein the RSU is configured to provide communication between the OBU and at least one of the edge computing device or the roadside computing unit.

4. The method of claim 1, wherein the functional node is deployed in an environment in which the transportation means is located based on at least one of:
a communication range supported by the functional node;
a computing capability of the functional node; or
a perceptual range supported by a perceptual device associated with the functional node,
wherein the functional note is configured to process perceptual information from the perceptual device.

5. The method of claim 1, wherein the providing the access comprises:
receiving an access request from the functional node based on the access protocol supported by the functional node;
performing a verification of access authorization for the functional node in response to the access request; and
providing the access in response to the access authorization being authenticated.

6. The method of claim 1, further comprising:
receiving a status report from the functional node, the status report being received periodically or in response to an update request of the service node; and
updating local status information corresponding to the functional node based on the status report.

7. The method of claim 1, wherein the transmitting the configuration information for the functional node comprises at least one of:
transmitting first configuration information for the functional node to configure at least one of a communication resource or a computing resource of the functional node; and
transmitting second configuration information for the functional node to configure a message interaction strategy for the functional node.

8. The method of any one of claims 1-7, wherein the controlling the message interaction with the functional node comprises:
receiving a first driving-related message for the transportation means from the functional node; and
determining a second driving-related message for the transportation means by processing the first driving-related message, the second driving-related message being different from the first driving-related message.

9. The method of claim 8, wherein the controlling the message interaction with the functional node further comprises:
causing the functional node to transmit the second driving-related message to the OBU via a communication connection between the functional node and the OBU, to control the driving of the transportation means;
wherein the method further comprises: transmitting the second driving-related message to the OBU via a communication connection between the service node and the OBU; or
the method further comprises: transmitting the second drive-related message to the OBU via a communication connection between the OBU and a third party platform.

10. The method of claim 8, wherein the determining the second driving-related message comprises:
receiving a third driving-related message for another transportation means from another functional node; and
determining the second driving-related message by processing the first driving-related message and the third driving-related message.

11. The method of any one of claims 1-7, wherein the service node has a communication connection with the OBU, and the method further comprises:
receiving a fourth driving-related message for the transportation means from a third party platform via a communication connection with the third party platform; and
providing the fourth driving-related message to the OBU.

12. The method of claim 8, wherein the first driving-related message is determined based on perceptual information acquired by at least one perceptual device associated with the functional node, the at least one perceptual device being deployed in an environment in which the transportation means is located.

13. A method for controlling driving, comprising: obtaining, at a functional node, an access to a service node based on an access protocol supported by the functional node, wherein the functional node is configured to provide a communication function with an on-board unit, OBU, of a transportation means or to provide a computing function for information associated with the transportation means;
receiving, based on the access, configuration information for the functional node from the service node; and
performing, based on the configuration information, a message interaction with the service node to facilitate controlling the driving of the transportation means via the OBU.

14. The method of claim 13, wherein the functional node comprises at least one of a roadside computing unit or an edge computing device, wherein each of the roadside computing unit and the edge computing device is configured to provide the computing function.

15. The method of claim 13, wherein the functional node comprises a roadside unit, RSU, configured to provide the communication function; and
wherein the service node is comprised in at least one of a roadside computing unit, an edge computing device or a central platform, and wherein the RSU is configured to provide communication between the OBU and at least one of the roadside computing unit or the edge computing device.

16. The method of claim 13, wherein the functional node is deployed in an environment in which the transportation means is located based on at least one of:
a communication range supported by the functional node;
a computing capability of the functional node; or
a perceptual range supported by a perceptual device associated with the functional node configured to process perceptual information from the perceptual device.

17. The method of claim 13, wherein the obtaining the access comprises:
transmitting an access request to the service node based on the access protocol supported by the functional node; and
obtaining the access in response to access authorization for the functional note being authenticated by the service node.

18. The method of claim 13, further comprising:
transmitting, periodically or in response to an update request from the service node, a status report to the service node to update local status information being maintained by the service node and corresponding to the functional node.

19. The method of claim 13, wherein the receiving the configuration information for the functional node comprises at least one of:
receiving first configuration information for the functional node to configure at least one of a communication resource or a computing resource of the functional node; or
receiving second configuration information for the functional node to configure a message interaction strategy for the functional node.

20. The method of any one of claims 13-19, wherein performing the message interaction with the service node comprises:
transmitting a first driving-related message for the transportation means to the service node.

21. The method of claim 20, wherein the functional node has a communication connection with the OBU, and wherein the performing the message interaction with the service node further comprises:
receiving a second driving-related message for the transportation means from the service node, wherein the second driving-related message is determined by the service node based on the first driving-related message and a third driving-related message for another transportation means; and
forwarding the second driving-related message to the OBU via the communication connection.

22. The method of any one of claims 13 to 19, wherein the functional node has a communication connection with the OBU, and wherein the performing the message interaction with the service node comprises:
obtaining a fourth driving-related message for the transportation means from the service node, the fourth driving-related message being provided by a third party platform.

23. The method of claim 20, wherein the first driving-related message is determined based on perceptual information acquired by at least one perceptual device associated with the functional node, the at least one perceptual device being deployed in an environment in which the transportation means is located.

24. An apparatus for controlling driving, comprising:
an access module configured to provide, at a service node, an access to a functional node based on an access protocol supported by the functional node, wherein the functional node is configured to provide a communication function with an on-board unit, OBU, of a transportation means or to provide a computing function for information associated with the transportation means;
a configuration module configured to transmit, based on the access, configuration information for the functional node to the functional node; and
an interaction module configured to control a message interaction with the functional node based on the configuration information to facilitate controlling the driving of the transportation means via the OBU.

25. The apparatus of claim 24, wherein the functional node comprises at least one of a roadside computing unit or an edge computing device, wherein each of the roadside computing unit and the edge computing device is configured to provide the computing function.

26. The apparatus of claim 24, wherein the functional node comprises a roadside unit, RSU, configured to provide the communication function; and
wherein the service node is comprised in at least one of a roadside computing unit, an edge computing device or a central platform, wherein the RSU is configured to provide communication between the OBU and at least one of the roadside computing unit or the edge computing device.

27. The apparatus of claim 24, wherein the functional node is deployed in an environment in which the transportation means is located based on at least one of:
a communication range supported by the functional node;
a computing capability of the functional node; or
a perceptual range supported by a perceptual device associated with the functional node,
wherein the functional node is configured to process perceptual information from the perceptual device.

28. The apparatus of claim 24, wherein the access module comprises:
a request receiving module configured to receive an access request from the functional node based on the access protocol supported by the functional node;
a verification module configured to perform a verification of access authorization for the functional node in response to the access request; and
a verification-based access module configured to provide the access in response to the access authorization being authenticated.

29. The apparatus of claim 24, further comprising:
a report receiving module configured to receive a status report from the functional node,
the status report being received periodically or in response to an update request of the service node; and
a status update module configured to update local status information corresponding to the functional node based on the status report.

30. The apparatus of claim 24, wherein the configuration module comprises at least one of:
a device configuration module configured to transmit first configuration information for the functional node to configure at least one of a communication resource or a computing resource of the functional node; and
a strategy configuration module configured to transmit second configuration information for the functional node to configure a message interaction strategy for the functional node.

31. The apparatus of any one of claims 24-30, wherein the interaction module comprises:
a first message receiving module configured to receive a first driving-related message for the transportation means from the functional node; and
a first message processing module configured to determine a second driving-related message for the transportation means by processing the first driving-related message, the second driving-related message being different from the first driving-related message.

32. The apparatus of claim 31, wherein the interaction module is configured to cause the functional node to transmit the second driving-related message to the OBU via a communication connection between the functional node and the OBU, to control the driving of the transportation means;
wherein the apparatus further comprises a first message transmission module configured to transmit the second driving-related message to the OBU via a communication connection between the service node and the OBU; or
wherein the apparatus further comprises a second message transmission module configured to transmit the second driving-related message to the OBU via a communication connection between the OBU and a third party platform.

33. The apparatus of claim 31, wherein the first message processing module comprises:
a second message receiving module configured to receive a third driving-related message for another transportation means from another functional node; and
a second message processing module configured to determine the second driving-related message by processing the first driving-related message and the third driving-related message.

34. The apparatus of any one of claims 24-30, wherein the service node has a communication connection with the OBU, and the apparatus further comprises:
a third message receiving module configured to receive a fourth driving-related message for the transportation means from a third party platform via the communication connection with the third party platform; and
a message provision module configured to provide the fourth driving-related message to the OBU.

35. The apparatus of claim 31, wherein the first driving-related message is determined based on perceptual information acquired by at least one perceptual device associated with the functional node, the at least one perceptual device being deployed in an environment in which the transportation means is located.

36. An apparatus for controlling driving, comprising:
an access module configured to obtain, at a functional node, an access to a service node based on an access protocol supported by the functional node, wherein the functional node is configured to provide a communication function with an on-board unit, OBU, of a transportation means or to provide a computing function for information associated with the transportation means;
a configuration module configured to receive, based on the access, configuration information for the functional node from the service node; and
an interaction module configured to perform a message interaction with the service node based on the configuration information to facilitate controlling the driving of the transportation means via the OBU.

37. The apparatus of claim 36, wherein the functional node comprises at least one of a roadside computing unit or an edge computing device, wherein each of the roadside computing unit and the edge computing device is configured to provide the computing function.

38. The apparatus of claim 36, wherein the functional node comprises a roadside unit, RSU, configured to provide the communication function; and
wherein the service node is comprised in at least one of a roadside computing unit, an edge computing device or a central platform, and wherein the RSU is configured to provide communication between the OBU and at least one of the roadside computing unit or the edge computing devices.

39. The apparatus of claim 36, wherein the functional node is deployed in an environment in which the transportation means is located based on at least one of:
a communication range supported by the functional node;
a computing capability of the functional node; or
a perceptual range supported by a perceptual device associated with the functional node,
the functional node is configured to process perceptual information from the perceptual device.

40. The apparatus of claim 36, wherein the access module comprises:
a request transmission module configured to transmit an access request to the service node based on the access protocol supported by the functional node; and
a verification module configured to obtain the access in response to access authentication for the functional node being authenticated by the service node.

41. The apparatus of claim 36, further comprising:
a report transmission module configured to transmit a status report to the service node periodically or in response to an update request from the service node, to update local status information corresponding to the functional node and being maintained by the service node.

42. The apparatus of claim 36, wherein the configuration module comprises at least one of:
a device configuration module configured to receive first configuration information for the functional node to configure at least one of a communication resource or a computing resource of the functional node; or
a strategy configuration module configured to receive second configuration information for the functional node to configure a message interaction strategy for the functional node.

43. The apparatus of any one of claims 36-42, wherein the interaction module comprises:
a message transmission module configured to transmit a first driving-related message for the transportation means to the service node.

44. The apparatus of claim 43, wherein the functional node has a communication connection with the OBU, and wherein the interaction module further comprises:
a message receiving module configured to receive a second driving-related message for the transportation means from the service node, the second driving-related message being determined by the service node based on the first driving-related message and a third driving-related message for another transportation means; and
a message forwarding module configured to forward the second driving-related message to the OBU via the communication connection.

45. The apparatus of any one of claims 36-42, wherein the functional node has a communication connection with the OBU, and wherein the interaction module comprises:
a message obtaining module configured to obtain a fourth driving-related message for the transportation means from the service node, the fourth driving-related message being provided by a third party platform.

46. The apparatus of claim 43, wherein the first driving-related message is determined based on perceptual information acquired by at least one perceptual device associated with the functional node, the at least one perceptual device being deployed in an environment in which the transportation means is located.

47. An electronic device comprising:
one or more processors; and
a storage device for storing one or more programs, which, when executed by the one or
more processors, cause the one or more processors to implement the method of any one of claims 1 to 12.

48. An electronic device comprising:
one or more processors; and
a storage device for storing one or more programs, which, when executed by the one or
more processors, cause the one or more processors to implement the method of any one of claims 13 to 23.

49. A computer readable storage medium for storing a computer program, wherein the computer program, when executed by a processor, causes the processor to implement the method of any one of claims 1 to 12.

50. A computer readable storage medium for storing a computer program, wherein the computer program, when executed by a processor, causes the processor to implement the method of any one of claims 13 to 23.

51. A driving control system, comprising: a central platform subsystem comprising the apparatus according to any one of claims 1 to 12; and
at least one of a roadside subsystem or an edge computing subsystem, comprising the apparatus according to any one of claims 13 to 23.

52. The system of claim 51, wherein the at least one of the roadside subsystem and the edge computing subsystem further comprises at least one perceptual device configured to acquire data associated with an environment in which the transportation means is located.
